**Europäisches Patentamt**

(19) **European Patent Office**

**Office européen des brevets**

(11) Numéro de publication: **0 034 531**
**A1**

(12) # DEMANDE DE BREVET EUROPEEN

(21) Numéro de dépôt: **81400210.1**

(22) Date de dépôt: **10.02.81**

(51) Int. Cl.³: **B 60 G 7/02**
**B 60 G 11/18**

(30) Priorité: **13.02.80 FR 8003452**

(43) Date de publication de la demande:
**26.08.81 Bulletin 81/34**

(84) Etats contractants désignés:
**DE GB IT**

(71) Demandeur: **SOCIETE ANONYME AUTOMOBILES CITROEN**
**117 à 167, Quai André Citroen**
**F-75747 Paris Cedex 15(FR)**

(71) Demandeur: **AUTOMOBILES PEUGEOT**
**75, avenue de la Grande Armée**
**F-75116 Paris(FR)**

(72) Inventeur: **Penot, Jean**
**127 Avenue de la République**
**F-94800 Villejuif(FR)**

(72) Inventeur: **Thiesce, Pierre**
**32, rue Villacoublay**
**F-78140 Velizy(FR)**

(74) Mandataire: **Boivin, Claude**
**9, rue Edouard-Charton**
**F-78000 Versailles(FR)**

(54) **Support d'essieu de véhicule automobile.**

(57) Le support d'essieu comporte deux éléments latéraux (1a et 1b) qui sont reliés rigidement l'un à l'autre par une traverse (4) et dont chacun joue à la fois le rôle de palier pour un bras ou levier (7a ou 7b) portant l'une des roues, d'appui ou d'ancrage à l'une des extrémités d'un ressort de suspension (9a ou 9b), et d'élément de liaison à la structure du véhicule par l'intermédiaire de moyens élastiques (3a, 3b ou 15a, 15b); ces moyens élastiques présentent une flexibilité négligeable dans des directions sensiblement verticale et transversale et prépondérante en direction longitudinale, et comprennent au moins deux éléments élastiques (3a, 3b) ou groupes d'éléments élastiques (15a, 15b) qui sont espacés dans la direction longitudinale du véhicule; la traverse ne possède une rigidité notable que vis-à-vis des couples de forces autour d'axes longitudinaux.

Fig.1

EP 0 034 531 A1

## Support d'essieu de véhicule automobile.

La présente invention concerne les supports d'essieu comportant
deux éléments latéraux qui sont reliés rigidement l'un à l'autre
par une traverse et dont chacun joue à la fois le rôle de palier
pour un bras ou levier portant l'une des roues, d'appui ou d'ancrage à l'une des extrémités d'un ressort de suspension, et d'élément de liaison à la structure du véhicule par l'intermédiaire de
moyens élastiques.

Le brevet français 2 392 839 décrit une structure de train arrière
comportant deux éléments latéraux dont chacun joue à la fois le
rôle de palier pour un bras ou levier portant l'une des roues,
d'appui ou d'ancrage à l'une des extrémités d'un ressort de suspension, et d'élément de liaison à la structure du véhicule par
l'intermédiaire de moyens élastiques; la structure d'essieu est
complétée par une traverse qui est solidaire des bras porteurs de
roue. Les moyens élastiques qui relient la structure d'essieu à la
structure du véhicule ne présentent une flexibilité notable que
dans le plan vertical et il est nécessaire de prévoir des moyens
élastiques supplémentaires pour assurer un maintien vis-à-vis des
couples de forces autour de l'axe longitudinal passant par les premiers moyens élastiques.

Le brevet français 1 515 396 décrit une disposition analogue dans
laquelle les deux éléments latéraux sont reliés rigidement par
la traverse. Mais les moyens élastiques qui assurent la liaison de
l'ensemble à la structure du véhicule sont constitués uniquement par deux blocs élastiques à faible flexibilité longitudinale qui sont disposés chacun d'un côté du plan médian longitudinal du véhicule. Cette disposition nécessite l'utilisation d'une traverse présentant une grande rigidité vis-à-vis des couples de forces autour d'axes verticaux et l'adjonction de tirants ancrés sur la partie inférieure de la traverse pour s'opposer aux couples de forces autour d'axes transversaux.

La présente invention a pour objet un support d'essieu du type ci-dessus qui est plus simple et plus léger.

Ce support d'essieu est caractérisé en ce que les moyens élastiques présentent une flexibilité négligeable dans des directions sensiblement verticale et transversale et prépondérante en direction longitudinale, et comprennent au moins deux éléments élastiques qui sont espacés dans la direction longitudinale du véhicule, et en ce que la traverse ne possède une rigidité notable que vis-à-vis des couples de forces autour d'axes longitudinaux.

Grâce à cette disposition, les contraintes sont regroupées sur les éléments latéraux. Du fait de la réalisation particulière des moyens élastiques, ceux-ci transmettent directement à la structure les efforts verticaux et transversaux exercés sur les éléments latéraux ainsi que les couples autour d'axes verticaux et transversaux. La traverse n'est plus soumise qu'aux couples autour d'axes longitudinaux; elle peut donc être très légère car, pour ne présenter une rigidité notable que vis-à-vis de ces couples, il lui suffit d'avoir une section dont le moment d'inertie soit important autour d'un axe parallèle à la direction longitudinale du véhicule.

On a décrit ci-après, à titre d'exemples non limitatifs, divers modes de réalisation du support d'essieu selon l'invention avec référence au dessin annexé dans lequel :

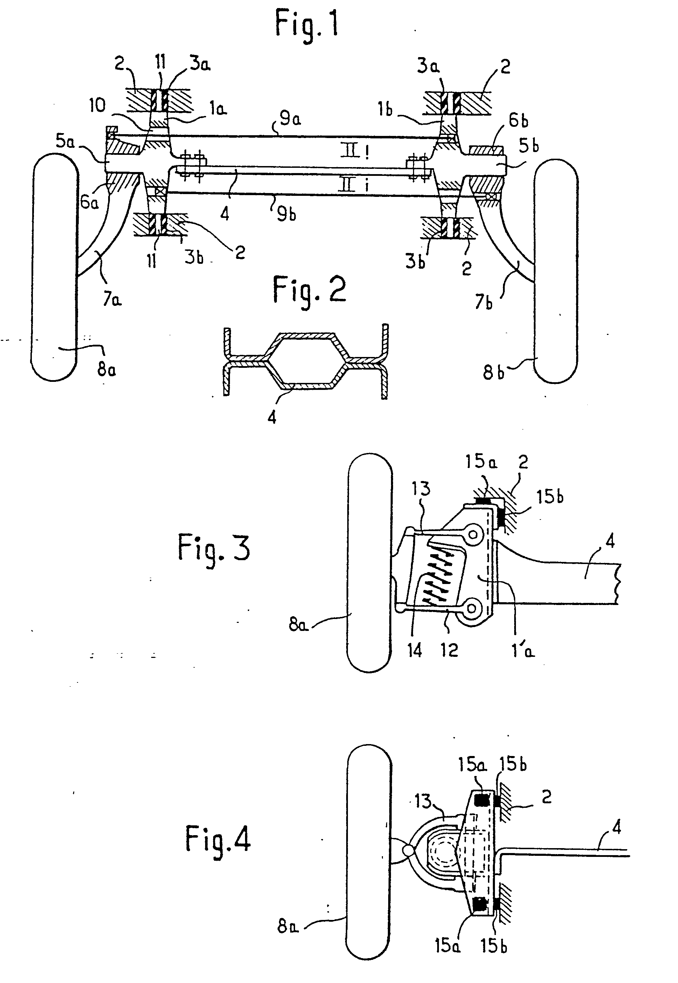

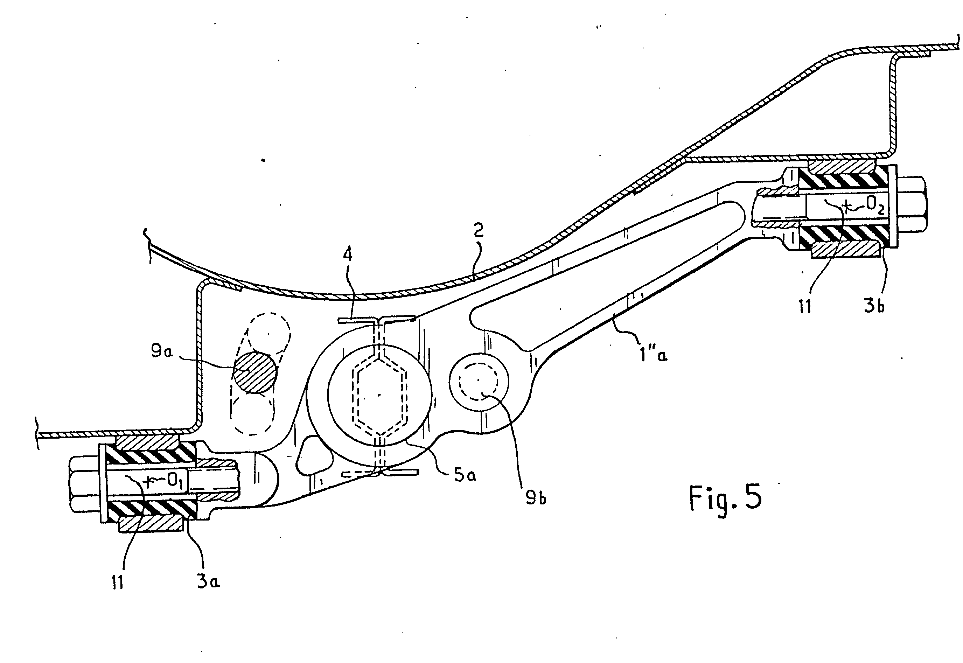

La Figure 1 est une vue en plan d'un premier mode de réalisation; La Figure 2 est une coupe suivant II-II de la figure 1; La Figure 3 est une vue en élévation d'un détail d'un second mode de réalisation; La Figure 4 est une vue en plan; La Figure 5 est une vue en élévation d'un élément latéral dans un troisième mode de réalisation.

Tel qu'il est représenté à la Figure 1, le support d'essieu selon l'invention comprend deux éléments latéraux 1a et 1b dont chacun

peut être relié à la structure 2 ou au châssis du véhicule par des manchons élastiques 3a et 3b et qui sont reliés l'un à l'autre par une traverse mince 4.

Chaque élément 1a ou 1b est muni d'une portée transversale 5a ou 5b sur laquelle peut à la fois pivoter et coulisser axialement un moyeu 6a ou 6b solidaire d'un bras 7a ou 7b portant une roue 8a ou 8b. Le moyeu 6a est relié à l'élément 1b par une barre de torsion 9a qui traverse librement une ouverture 10 prévue dans l'élément 1a et dont les extrémités sont ancrées respectivement au moyeu 6a et à l'élément 1b. De manière analogue, une barre de torsion 9b traverse librement l'élément 1b et a ses extrémités ancrées au moyeu 6b et à l'élément 1a. Lorsque l'un des moyeux pivote, par exemple le moyeu 6a, la barre de torsion 9a se tord et, fléchissant légèrement, se déplace latéralement dans l'ouverture de l'élément 1a. Du fait de ce déplacement de la barre de torsion, le moyeu 6a se rapproche et s'éloigne successivement de l'élément 1a en coulissant axialement sur la portée 5a de cet élément.

On voit de la description qui précède, que chacun des éléments 1a et 1b a une triple fonction :
- il assure la liaison du support d'essieu à la structure du véhicule 2, par l'intermédiaire des manchons élastiques 3a et 3b;
- il forme palier d'articulation pour le bras support de roue correspondant 7a ou 7b;
- il sert d'ancrage à l'une des extrémités d'un ressort de suspension, à savoir de l'une des barres 9a ou 9b.

Chacun des manchons 3a et 3b est emmanché dans la structure 2 et sur des appendices 11 de l'élément 1a ou 1b; les deux appendices 11 d'un même élément ont un axe commun dirigé parallèlement à la direction longitudinale du véhicule. Par suite de cette disposition, l'élément latéral 1a ou 1b peut facilement se déplacer parallèlement à la direction longitudinale du véhicule, les manchons travaillant en cisaillement avec une notable flexibilité; par contre, un mouvement de l'élément, en direction verticale ou autour d'axes transversaux ou verticaux, est empêché par les manchons qui travaillent alors en compression, avec une faible flexibilité en directions transversale et verticale; et les mouvements de basculement de chaque élément 1a, 1b autour d'axes longitudinaux sont empêchés par la traverse 4, qui n'est soumise qu'aux couples autour de tels axes. Pour résister à ces couples, elle a une section dont le moment d'inertie est prépondérant autour d'un axe parallèle à la direction longitudinale du véhicule; elle a, par exemple, une section en I dont l'âme est verticale et éventuellement renflée en son centre, comme on le voit à la Figure 2. L'axe des portées 5a et 5b se trouve sensiblement dans l'axe de la traverse.

Dans le mode de réalisation des Figures 3 et 4, le support d'essieu comprend encore deux éléments latéraux dont l'un est visible en 1'a et qui sont reliés l'un à l'autre par une traverse 4. La roue 8a est reliée à l'élément 1'a par des bras supports de roue 12 et 13. Un ressort 14 interposé entre le bras 12 et l'élément 1'a, constitue le ressort de suspension. Deux paires de blocs élastiques 15a et 15b, qui sont écartées l'une de l'autre dans la direction longitudinale du véhicule relient l'élément 1'a à la structure 2 du véhicule. Les blocs ont une faible épaisseur et les blocs 15a sont horizontaux alors que les blocs 15b sont verticaux et parallèles à la direction horizontale du véhicule.

Du fait de leur faible épaisseur, les blocs 15a et 15b sont peu déformables dans une direction perpendiculaire à leur plan; par contre, ils sont notablement déformables dans une direction parallèle à leur plan où ils travaillent en cisaillement. Les efforts verticaux sont transmis à la structure 2 par les blocs 15a alors que les efforts transversaux lui sont transmis par les blocs 15b et, comme dans le mode de réalisation de la Figure 1, la traverse 4 n'est soumise qu'aux couples de forces d'axes longitudinaux.

A la Figure 5, on voit un élément latéral 1"a qui est semblable dans ses grandes lignes à l'élément 1a. On y retrouve notamment les manchons élastiques 3a et 3b emmanchés sur les appendices 11 de l'élément. Ces appendices sont encore dirigés parallèlement à la direction longitudinale du véhicule; mais ils ne sont plus coaxiaux, le manchon 3a situé à l'avant étant disposé plus bas que le manchon 3b disposé à l'arrière. La traverse 4 est représentée verticale; mais elle pourrait avantageusement être perpendiculaire à l'axe $O_1 O_2$ reliant les centres $O_1$ et $O_2$ des manchons élastiques 3a et 3b de manière que le moment d'inertie de sa section soit maximal autour d'un axe parallèle à $O_1 O_2$ pour s'opposer au mieux aux basculements de l'élément latéral 1a (ou 1b) autour de l'axe $O_1 O_2$.-

Il va de soi que la présente invention ne doit pas être considérée

0034531

comme limitée aux modes de réalisation décrits et représentés,
mais en couvre au contraire, toutes les variantes. C'est ainsi,
par exemple, que la traverse au lieu d'être solidarisée aux
éléments latéraux, par exemple, par soudage, rivetage ou vissage,
pourrait former avec ces éléments un ensemble monopièce moulé.

- 1 -

0034531

Revendications de brevet.

1. - Support d'essieu comportant deux éléments latéraux (1a et 1b) qui sont reliés rigidement l'un à l'autre par une traverse (4) et dont chacun joue à la fois le rôle de palier pour un bras ou levier (7a ou 7b) portant l'une des roues, d'appui ou d'ancrage à l'une des extrémités d'un ressort de suspension (9a ou 9b), et d'élément de liaison à la structure du véhicule par l'intermédiaire de moyens élastiques (3a, 3b ou 15a, 15b) caractérisé en ce que les moyens élastiques (3a et 3b) présentent une flexibilité négligeable dans des directions sensiblement verticale et transversale et prépondérante en direction longitudinale, et comprennent au moins deux éléments élastiques (3a, 3b) ou groupes d'éléments élastiques (15a, 15b) qui sont espacés dans la direction longitudinale du véhicule, et en ce que la traverse ne possède une rigidité notable que vis-à-vis des couples de forces autour d'axes longitudinaux.

2. - Support d'essieu selon la revendication 1, caractérisé en ce que la traverse (4) a une section en I dont l'âme éventuellement renflée en son centre est sensiblement verticale.

3. - Support d'essieu selon la revendication 2, caractérisé en ce que l'âme de la section de la traverse (4) est sensiblement perpendiculaire à la direction de l'axe reliant les centres desdits deux éléments élastiques (3a-3b) ou groupes d'éléments élastiques (15a-15b).

4. - Support d'essieu selon l'une des revendications 1 à 3 caractérisé en ce que les moyens élastiques sont, pour chaque élément latéral, constitués par des manchons élastiques (3a et 3b) montés sur deux appendices (11) de l'élément, et dont les axes sont sensiblement parallèles à la direction longitudinale du véhicule.

5. - Support d'essieu selon la revendication 4, caractérisé en ce que les deux manchons (3a et 3b) sont coaxiaux.

6. - Support d'essieu selon la revendication 4, caractérisé en ce que le manchon (3a) situé à l'avant de l'élément est plus bas que le manchon (3b) situé à l'arrière.

7. - Support d'essieu selon l'une des revendications 1 à 3, caractérisé en ce que les moyens élastiques sont constitués pour chaque élément latéral, de deux paires de blocs élastiques minces (15a-15b) qui sont écartées l'une de l'autre dans la direction longitudinale du véhicule, chaque paire comportant un bloc horizontal (15a) et un bloc(15b) vertical et parallèle à la direction longitudinale du véhicule.

Fig. 1

Fig. 2

Fig. 3

Fig.4

Fig. 5

**RAPPORT DE RECHERCHE EUROPEENNE** EP 81 40 0210

Office européen
des brevets

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| A | FR - A - 2 304 490 (NISSAN MOTOR CIE) | 1 | |
| A | FR - A - 2 150 479 (DAIMLER BENZ) | 1 | |
| A | FR - A - 1 550 058 (SIMCA) | 1 | |
| A | FR - A - 869 632 (DAIMLER BENZ) | 1 | |
| A | DE - A - 2 441 905 (SCHNABELE) | | |
| | ---- | | **DOMAINES TECHNIQUES RECHERCHES (Int. Cl. ³)** |

OEB Form 1503.2  06.78

**Office européen des brevets**

## RAPPORT DE RECHERCHE EUROPEENNE

Numéro de la demande

EP 81 40 0210

| Catégorie | Citation du document avec indication, en cas de besoin, des parties pertinentes | Revendication concernée | CLASSEMENT DE LA DEMANDE (Int. Cl.³) |
|---|---|---|---|
| | **DOCUMENTS CONSIDERES COMME PERTINENTS** | | |
| D | FR - A - 2 392 839 (RENAULT)<br>* En entier * | 1,4,5,7 | B 60 G 7/02<br>11/18 |
| D | FR - A - 1 515 396 (DAIMLER BENZ)<br>* En entier * | 1 | |
| | FR - A - 1 347 864 (INTER TECHNIQUE)<br>* En entier * | 1,4,5 | |
| | FR - A - 2 400 441 (PORSCHE)<br>*En entier * | 1,4,6 | **DOMAINES TECHNIQUES RECHERCHES (Int. Cl.³)**<br><br>B 60 G<br>B 62 D |
| | FR - A - 762 051 (DAIMLER BENZ)<br>* Page 2, ligne 26 - page 3, ligne 90; figures 1-3 * | 1,2,3 | |
| | FR - A - 2 296 542 (CHRYSLER)<br>* Page 2, ligne 30 - page 5, ligne 10; figure 1,2 * | 1,4,6 | |
| | FR - A - 1 185 492 (DAIMLER BENZ)<br>* En entier * | 1,4,6 | **CATEGORIE DES DOCUMENTS CITES**<br><br>X: particulièrement pertinent |
| PE | GB - A - 2 041 845 (CHRYSLER U.K.)<br>* Page 2, ligne 65 - page 4, ligne 9; figures 1-4 * | 1,4,6 | A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | ./. | | &: membre de la même famille, document correspondant |

X Le présent rapport de recherche a été établi pour toutes les revendications

| Lieu de la recherche | Date d'achèvement de la recherche | Examinateur |
|---|---|---|
| La Haye | 08-05-1981 | ESPEEL |

OEB Form 1503.1 06.78